# EUROPÄISCHE PATENTSCHRIFT

(11) **EP 1 006 303 B1**
(45) Veröffentlichungstag und Bekanntmachung des Hinweises auf die Patenterteilung: **03.09.2003**
(21) Anmeldenummer: 99810988.8
(22) Anmeldetag: 01.11.1999
(51) Int. Cl.: F16K 31/06

(54) **Elektromagnetisches Ventil für hydraulische Medien**
Solenoid valve for hydraulic fluids
Electrovanne pour fluides hydrauliques

(30) Priorität: 30.11.1998 EP 98811189
(43) Veröffentlichungstag der Anmeldung: 07.06.2000
(73) Patentinhaber: Wärtsilä Schweiz AG, 8401 Winterthur (CH)
(72) Erfinder: Wunder, Alfred Franz, 8442 Hettlingen (CH)
(74) Vertreter: Sulzer Management AG

(56) Entgegenhaltungen:
- EP-A- 0 870 958
- EP-A- 0 870 959
- US-A- 5 640 987

## Beschreibung

Die Erfindung betrifft ein elektromagnetisches Ventil für hydraulische Medien gemäss dem Oberbegriff des Anspruches 1.

Ein Ventil dieser Art ist aus der EP-A-0 870 959 bekannt. Das Ventil enthält ein Gehäuse, einen Ventilschieber, der in einer Durchbohrung im Gehäuse verschiebbar angeordnet ist und zwei Elektromagnete mit einem Ankerteil, der jeweils einer Stirnseite des Ventilschiebers zugeordnet ist, derart, dass bei Erregung der Elektromagneten der Ventilkörper jeweils verschoben wird. Die Durchbohrung im Gehäuse und der Ventilschieber sind mit einer Hartbeschichtung versehen. Mit einem solchen Ventil werden zwar kurze Schaltzeiten erreicht. Es hat sich jedoch gezeigt, dass ultraschnelle Schaltzeiten sich nicht realisieren lassen.

Der Erfindung liegt die Aufgabe zugrunde, ein elektromagnetisches Ventil zu verbessern.

Diese Aufgabe wird erfindungsgemäss durch die Merkmale des Anspruches 1 gelöst.

Die mit der Erfindung erzielbaren Vorteile sind darin zu sehen, dass durch die Zuordnung eines Ankerteiles mit hoher Sättigungsmagnetisierung zum Ventilschieber die Schaltzeit des Ventils weiter verkürzt und der Energiebedarf verringert wird. Zudem wird die Fertigung vereinfacht.

Nachfolgend wird die Erfindung anhand der beiliegenden Zeichnungen erläutert.

Es zeigen:
- Fig. 1: Einen Schnitt durch ein Ausführungsbeispiel eines erfindungsgemässen Ventils;
- Fig. 2: eine Einzelheit "A" in Fig. 1 im grösseren Massstab;
- Fig. 3: eine Einzelheit "B" in Fig. 1 im grösseren Massstab;
- Fig. 4: ein Endabschnitt des Ventilschiebers im Schnitt und
- Fig. 5: eine Ansicht in Richtung des Pfeiles C in Fig. 4.

Das Ventil besteht im wesentlichen aus einem Ventilteil 1 und zwei Antriebsteilen 2, die als Elektromagnete ausgebildet und mittels Schrauben 3 am Ventilteil 1 befestigt sind.

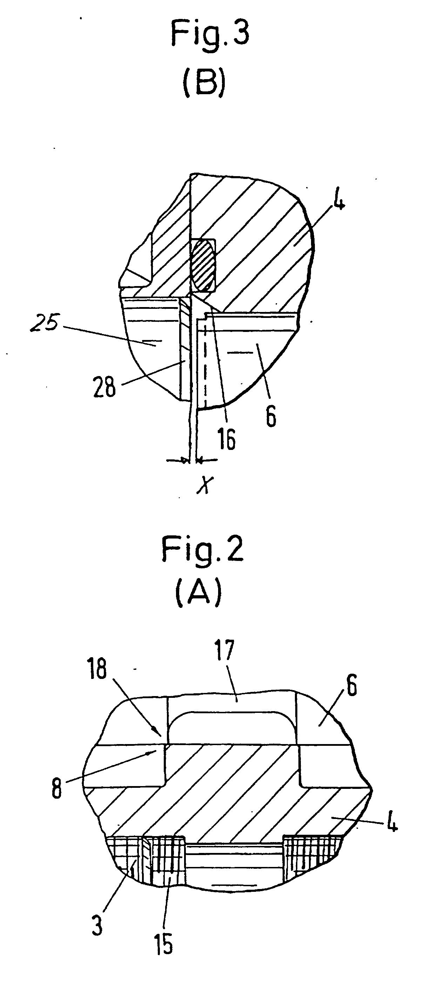

Der Ventilteil 1 besteht aus einem Gehäuse 4 mit einer Durchbohrung 5 entlang der Zylinderachse und aus einem Ventilschieber 6, der in der Durchbohrung hin und her bewegbar angeordnet ist. Das Gehäuse 4 besteht aus einem magnetischen Werkstoff. Im Gehäuse 4 sind zwei Ringnuten 7 ausgebildet, die parallel verlaufend in der Durchbohrung 5 ausgebildet sind, derart, dass die nebeneinanderliegenden Kanten jeweils eine Steuerkante 8 bilden (Fig. 2). Ferner sind ein Zufuhrkanal 11 und ein Rücklaufkanal 12, die jeweils in eine Ringnut 7 münden sowie ein Verbraucherkanal 13 im Gehäuse ausgebildet, der in die Durchbohrung 5 mündet. In den Stirnflächen des Gehäuses 4 sind ringförmige Ausnehmungen zur Aufnahme von Dichtungsringen 14 vorgesehen. Es sind vier Gewindelöcher 15 im Gehäuse 4 ausgebildet, um die Antriebsteile am Gehäuse zu befestigen. Im Gehäuse 1 sind an beiden Enden der Durchbohrung jeweils eine Abschrägung 16 ausgebildet (Fig. 3).

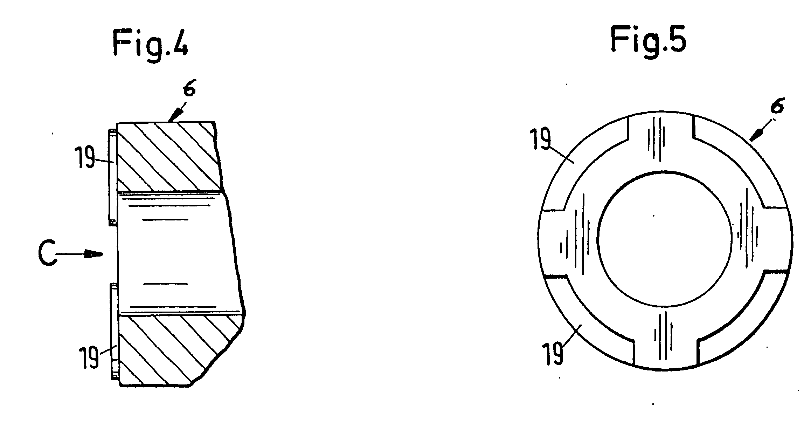

Der Ventilschieber 6 ist etwas kürzer als das Gehäuse 4 des Ventilteils 1. Der Ventilschieber 6 weist eine ringförmige Nut 17 auf, derart, dass eine Ringkammer entsteht, deren Kanten die Steuerkanten 18 am Ventilschieber 3 bilden (Fig. 2). Der Ventilschieber 6 ist als Hohlzylinder ausgebildet und weist Radialbohrungen auf, die mit dem Rücklaufkanal 12 kommunizieren. Am Umfang ist eine ringförmige Nut 17 ausgebildet, so dass eine Ringkammer entsteht, deren Kanten die Steuerkanten 18 am Ventilschieber 3 bilden (Fig. 2). Wie die Figuren 4 und 5 zeigen, sind an den Stirnflächen des Ventilschiebers 3 vier freistehende Auflageabschnitte 19 ausgebildet, deren Abstand von der restlichen Stirnfläche ca. 0,05 mm beträgt. Der Ventilschieber besteht aus magnetisierbarem Werkstoff.

Die Durchbohrung 13 im Gehäuse 4 und der Ventilschieber 6 und insbesondere die Steuerkanten 8, 18 sind mit einer Hartbeschichtung versehen, die z.B. aus Wolframkarbid oder Titannitrit besteht.

Jeder Elektromagnet besteht aus einer Spule 21, einen Spulenkörper 22, auf welchem die Spule direkt aufgewickelt ist und einen zweiteilig ausgebildeten Anker 23. Der Anker 23 umfasst einen quaderförmigen ersten Teil 24 und einen zylinderförmigen zweiten Teil 25. Der erste Teil 24 weist ausgehend von einer Stirnseite eine Ausnehmung zur Aufnahme des Spulenkörpers 22 mit der Spule 21 auf. An der anderen Stirnseite des ersten Teiles 24 ist eine zylindrische Ausnehmung 29 so ausgebildet, dass ein Wandabschnitt 31 gebildet wird. Der zweite Teil 25 des Ankers 23 ist an einer Stirnseite mit einem konischen Abschnitt 28 versehen und an der anderen Stirnseite weist einen zylindrischen Ansatz 41 auf. Der zweite Teil 25 ist über den Ansatz 41 mittels einer Pressverbindung mit dem ersten Teil 24 verbunden, sodass eine ringförmige Ausnehmung im Anker 23 gebildet wird, in welcher der Spulenkörper 22 und die Spule 21 eingesetzt sind. Im Wandabschnitt 31 sind ferner Durchgangslöcher 30 für die Spulenanschlussleitungen (nicht dargestellt) vorgesehen.

Im zweiten Teil 25 ist eine Nut zur Aufnahme eines Dichtungsringes 26 ausgebildet. Der erste und zweite Teil 24, 25 des Ankers 23 bestehen aus einem weichmagnetischen Werkstoff, wobei der Werkstoff des ersten Teiles 24 eine Sättigungsmagnetisierung von ca. 1.0 T und der Werkstoff des zweiten Teiles 25 eine Sättigungsmagnetisierung von > 1.5 T aufweist.

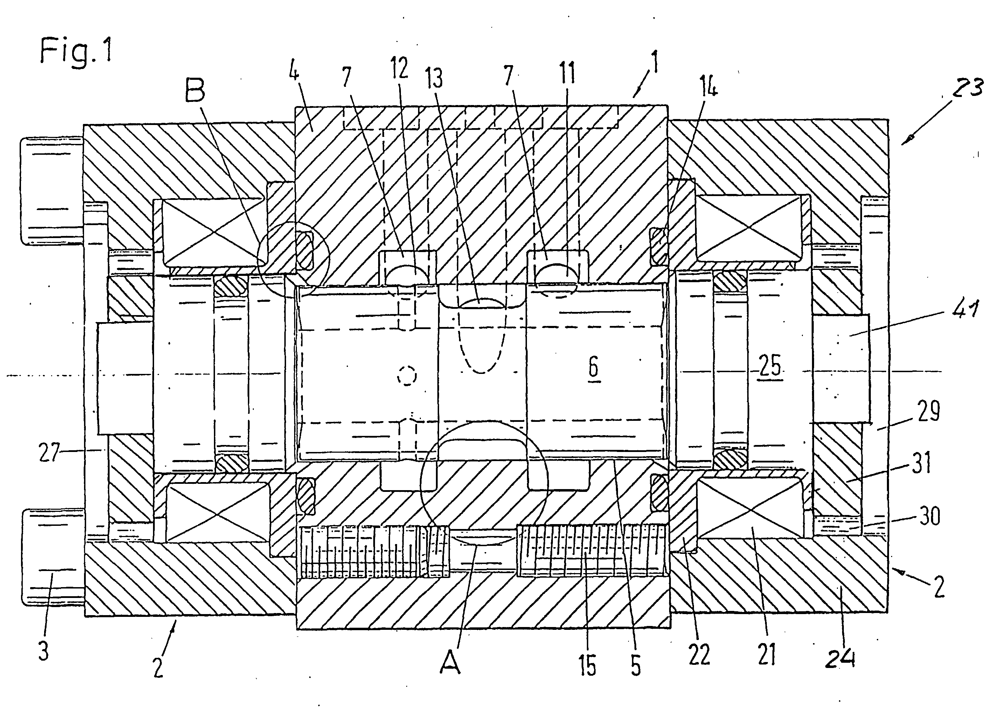

Wie die Fig. 1 zeigt, sind jeweils eine Stirnfläche des Ventilschiebers 6 und die Stirnfläche des zweiten Teils 25 des Ankers 23 gegenüberliegend angeordnet, d.h. der Teil des Ankers mit der höheren Sättigungsmagnetisierung ist benachbart zum Ventilschieber 6 angeordnet. Da der Werkstoff des zweiten Teiles eine höhere magnetische Induktion zulässt, wird die durch den Erregerstrom erzeugte Feldstärke weitgehend ausgenutzt, woraus sich die genannten Vorteile ergeben.

In der nachfolgenden Beschreibung wird davon ausgegangen, dass der Ventilschieber 6 an den zweiten Teil 25 des einen Elektromagneten 2 anliegt und zwischen dem Ventilschieber 6 und dem zweiten Teil 25 des anderen Elektromagneten 2 ein Spalt X vorhanden ist (Fig. 3).

Zur Betätigung des Ventils wird der Elektromagnet erregt. Durch das erzeugte Magnetfeld wird der Ventilschieber 6 gegen den zweiten Teil 25 des Ankers 23 gezogen, bis die Oberflächen der freistehenden Abschnitte 19 an der Stirnseite des zweiten Teiles 25 des Ankers anliegen. Um das Anziehen des Ventilkörpers 6 zu gewährleisten, muss das zwischen dem Ventilkörper 6 und dem zweiten Teil 25 des Ankers angesammelte Druckmittel, z.B. Oel in den Hohlraum im Ventilschieber verdrängt werden. Dadurch wird die Funktion des Ventils verbessert. Wird die Erregerspannung abgeschaltet, so wird der Ventilschieber durch die verbleibende Remanenz festgehalten. Der Erregerstrom erzeugt Wirbelströme im Spulenkörper. Um die Wirbelstromverluste zu minimieren, besteht der Spulenkörper aus Titan, welches eine geringe elektrische Leitfähigkeit von 0.23 · 10⁵ (Ω cm)⁻¹ aufweist.

## Patentansprüche

1. Elektromagnetisches Ventil für hydraulische Medien, welches Ventil ein Ventil gehäuse (4), mit einer Durchbohrung (5), einen Ventilschieber (6), und zwei Elektromagnete (2) mit einem Anker (23) enthält, wobei die beiden Elektromagnete (2) jeweils einer Stirnseite des Ventilschiebers (6) zugeordnet sind und der Ventilschieber jeweils bei der Erregung eines Elektromagneten gegen den Anker (23) in eine Schaltstellung gezogen und bei Abschaltung der Erregerspannung durch die verbleibende Remanenz festgehalten wird, wobei die Durchbohrung (5) im Gehäuse (4) und der Ventilschieber (6) mit einer Hartbeschichtung versehen sind, **dadurch gekennzeichnet, dass** der Anker (23) einen ersten und zweiten Teil (24, 25) umfasst, die aus weichmagnetischen Werkstoff mit unterschiedlicher Sättigungsmagnetisierung bestehen und dass der Teil (25) des Ankers mit der höheren Sättigungsmagnetisierung dem Ventilschieber (6) so zugeordnet ist, dass deren Stirnflächen einander gegenüberliegen.

2. Ventil nach Anspruch 1, **dadurch gekennzeichnet, dass** der zweite Teil (25) des Ankers (23) aus einem weichmagnetischen Werkstoff besteht, welcher eine Sättigungsmagnetisierung von > 1.5 Tesla aufweist.

3. Ventil nach Anspruch 1, **dadurch gekennzeichnet, dass** der erste Teil (24) des Ankers (23) aus einem weichmagnetischen Werkstoff besteht, welcher eine Sättigungsmagnetisierung von 1.0 T aufweist.

4. Ventil nach einem der Ansprüche 1 bis 3, **gekennzeichnet durch** mindestens zwei freistehende Auflageabschnitte (19), die an den Stirnseiten des Ventilschiebers (3) ausgebildet und jeweils mit einem Elektromagneten in Wirkverbindung bringbar sind.

5. Ventil nach einem der Ansprüche 1 oder 4, **dadurch gekennzeichnet, dass** die Länge des Ventilgehäuses (4) kleiner als das 2,5-fache des Aussendurchmessers des Ventilschiebers (6) beträgt.

6. Ventil nach einem der Ansprüche 1 bis 5, **dadurch gekennzeichnet, dass** die Hartbeschichtung aus Titannitrit, Wolframkarbid oder dgl. besteht.

7. Ventil nach Anspruch 1, **gekennzeichnet durch** einen Spulenkörper (22) für die Magnetspule (21), der aus einem Material mit einer elektrischen Leitfähigkeit kleiner als 3,00 · 10⁵ (Ω cm)⁻¹ besteht.

## Claims

1. Electromagnetic valve for hydraulic media, said valve containing a valve housing (4) with a passage bore (5), a valve slider (6) and two electromagnets (2) with an armature (23), with the two electromagnets (2) being arranged at end faces of the valve slider (6), with the valve slider being respectively drawn toward the armature (23) into a switching position when one electromagnet is excited and being held firmly by the remaining remanence when the excitation voltage is switched off and with the passage bore (13) in the housing (4) and the valve slider (6) being provided with a hard coating, **characterised in that** the armature (23) comprises a first part and a second part (24, 25) which consist of soft magnetic material of different saturation magnetisation; and **in that** the part (25) of the armature with the higher saturation magnetisation is associated with the valve slider (6) in such a manner that their end faces lie opposite to one another.

2. Valve in accordance with claim 1 **characterised in that** second part (25) of the armature (23) consists of a soft magnetic material which has a saturation magnetisation of > 1.5 Tesla.

3. Valve in accordance with claim 1 **characterised in that** the first part (24) of the armature (23) consists of a soft magnetic material which has a saturation magnetisation of 1.0 Tesla.

4. Valve in accordance with one of the claims 1 to 3 **characterised by** at least two free standing support sections (19) which are formed at the end faces of the valve slider (3) and which can in each case be brought into active contact with an electromagnet.

5. Valve in accordance with one of the claims 1 to 4 **characterised in that** the length of the valve housing (4) is less than 2.5 times the outer diameter of the valve slider (6).

6. Valve in accordance with one of the claims 1 to 5 **characterised in that** the hard coating consists of titanium nitrite, tungsten carbide or the like.

7. Valve in accordance with claim 1 **characterised by** a coil body (22) for the magnet coil (21) which consists of a material with an electrical conductivity less than 3.00 10⁵ (Ω cm)⁻¹.

## Revendications

1. Vanne électro-magnétique pour des fluides hydrauliques, cette vanne comportant un boîtier de vanne (4) avec un perçage traversant (5), un obturateur de vanne (6) et deux électro-aimants (2) avec un induit (23), où les deux électro-aimants (2) sont associés respectivement à un côté frontal de l'obturateur de vanne (6) et l'obturateur de vanne, respectivement lors de l'excitation d'un électro-aimant, est attiré contre l'induit (23) dans une position de commutation et, lors de la coupure de la tension d'excitation, est retenu par la rémanence qui subsiste, où le perçage traversant (5) dans le boîtier (4) et l'obturateur de vanne (6) sont pourvus d'un revêtement dur, **caractérisée en ce que** l'induit (23) comprend une première et une seconde partie (24,25) qui sont constituées d'un matériau magnétique mou d'une saturation magnétique différente, et **en ce que** la partie (25) de l'induit présentant la saturation magnétique plus élevée est associée à l'obturateur de vanne (6) de façon que leurs faces frontales s'opposent.

2. Vanne selon la revendication 1, **caractérisée en ce que** la seconde partie (25) de l'induit (23) est constituée d'un matériau magnétique mou qui a une saturation magnétique de >1,5 Tesla.

3. Vanne selon la revendication 1, **caractérisée en ce que** la première partie (24) de l'induit (23) est constituée d'un matériau magnétique mou qui a une saturation magnétique de 1,0 T.

4. Vanne selon l'une des revendications 1 à 3, **caractérisée par** au moins deux tronçons d'application érigés librement (19) qui sont réalisés aux côtés frontaux de l'obturateur de vanne (3) et qui peuvent être amenés chacun en liaison fonctionnelle avec un électro-aimant.

5. Vanne selon l'une des revendications 1 ou 4, **caractérisée en ce que** la longueur du boîtier de vanne (4) est plus petite que 2,5 fois le diamètre extérieur de l'obturateur de vanne (6).

6. Vanne selon l'une des revendications 1 à 5, **caractérisée en ce que** le revêtement dur est constitué de nitrure de titane, de carbure de tungstène ou analogue.

7. Vanne selon la revendication 1, **caractérisée par** un corps de bobine (22) pour la bobine magnétique (21) qui est constitué d'un matériau d'une conductivité électrique inférieure à 3,00 . 10⁵ (Ωcm)⁻¹.
